# EUROPEAN PATENT APPLICATION

(11) **EP 1 577 077 A2**
(43) Date of publication of application: **21.09.2005**
(21) Application number: 04013621.0
(22) Date of filing: 09.06.2004
(51) Int. Cl.: B29C 65/34, B29C 45/14, B21F 27/12, B29C 47/02, B29C 47/20, F16L 9/128, F16L 23/032, F16L 47/03

(54) **Piping made of steel mesh reinforced plastic composite pipe and method for making the pipe**

(30) Priority: 16.03.2004 CN 04108648
(71) Applicant: Harbin Institute of Technology Starway Industrial Co. Ltd., 150001 P.R. (CN)
(72) Inventor: He, Yiliang, Harbin Helongjiang Province 150001 P.R. (CN)
(74) Representative: Kirschner, Klaus Dieter

(57) **Abstract**

This invention provides a method for manufacturing steel mesh reinforced plastic composite pipe, which includes: the transverse steel wires (11) are supplied to the steel mesh welding machine from the transverse wire reels hung outside the device, a fuzzy resistance welding technique is adopted to form the steel mesh framework by welding the transverse steel wires onto the longitudinal steel wires (1) coming from the longitudinal wire feeder. The formed steel mesh framework is continuously hauled off and passes through the combining die (9), the combining die embraces the steel mesh framework and receives the molted thermoplastic supplied from the side face of the combining die, the plastic and the steel mesh framework combine inside the combining die to form the semi-finished pipe, which is hauled off (7) through the cooling tank (6) to form the finished composite pipe. This invention also relates to a production line for manufacturing the composite pipe as well as a piping system formed by connecting the pipes with joining structures.

## Description

This invention relates to a piping, and specifically to a piping that made of steel mesh reinforced plastic composite pipe, as well as method and device for making the pipe.

Piping generally comprises pipe and connecting structure. For example, W09626380 describes a plastic composite pipe with steel framework and a connecting structure. In the connection structure, the overly long steel framework and the resistance wires exposed to the air do not allow a solid and reliable connection between the pipes and the connecting structure.

The method and device for making composite plastic pipe with steel framework are well known in the art, which are mainly described in patents such as SU1362645, W094/09963, CN94104509 and GB2277975.

Patent SU1362645 relates to the manufacturing of plastic composite pipe by means of extrusion in a multiple of steps as follows: the inner layer of the plastic pipe is formed by first extrusion, wherein the longitudinal wires that are equidistantly spaced along the axis of the pipe are placed inside the inner layer of the pipe, while the transverse wires wound up to the longitudinal wires are exposed to the outside; then the outer layer of the plastic pipe is formed by second extrusion. In this way the plastic composite pipe with steel framework is made.

W094/09963 adopts a one-step extrusion process, in which a welding machine is used. Firstly, both longitudinal wire and transverse wire arc welded together to form a steel wire-mesh framework, then a composite plastic pipe with steel framework is formed by extruding plastics to encase the framework.

CN94104509 is similar to W094/09963 in technical principle except for that the structure of the welding machine is different.

GB2277975 is similar to W094/09963 and CN94 104509 in principle except for that at least two transverse wires are wound up and welded to the longitudinal wires.

All of the aforementioned techniques have the following shortcomings:
A. The die for combining plastic and steel framework is placed in the inner cavity of the welding machine and the axis of the screw of the extruder and the axis of the barrel coincide with the axis of the whole production line (known as method of combining of plastic and steel framework with feeding plastic from axial direction). Such a structure has some shortcomings as follows: firstly, commercial production of smaller diameter pipes (less than DN70mm) can not be realized due to the restraint of the size of the runway of the plastic as well as the size of the sizing sleeve; secondly, the device for producing larger diameter pipes (greater than DN400) is too huge and too complicated; thirdly, since the die for plastic and framework combining is placed inside the inner cavity of the welding machine, it is not convenient to adjust the technical parameters and not convenient for device maintenance, thus the quality of the products can not be easily controlled; fourthly, the service life of the bearing of the combining unit that sustain bad is short under long-term high temperature working conditions.
B. In prior arts, the welding machine for making steel framework has two supporting structures. The transverse wire reel is placed and rotates round the main shaft. The transverse wires have to be wound up to the wire reel prior to use, while the backup transverse wire reel should also be placed round the main shaft. In this case, the workers have to wind up the wires to the reel beforehand and which has to done by the side of the device during the Operation. This increases burden of labor and decreases working efficiency.
C. In prior arts, traditional pressure resistance welding technique is used. That is, the welding is conducted at the crossing points of the longitudinal wires and the transverse wires by the welding wheel or wheels that directly press on the transverse wires under the pressure of spring. During such an operation, the welding wheel may be ablated by the electric arc and also be seriously abraded due to high working temperature and working pressure, thus the service life of the welding wheel is reduced. Moreover, as each welding wheel needs one welding machine to supply power, the quantity of welding machines has to be increased to match the needs of welding wheels when more than one welding wheels are to be used.

The object of this invention is to provide a pipe joining structure and pipe fittings ensure that the whole pipeline has reliable connection and same anticorrosion performance.

This object is achieved by a piping system, comprising steel mesh reinforced plastic composite pipe and connecting structure, which is characterized in that said connecting structure comprises an electrofusion coupler and a pipe end that matches the inner surface of said electrofusion coupler, there are electric heating wires coated with plastic placed in the inner surface of the electrofusion coupler, which wires are connected to the two terminals, and that there is a annular steel mesh framework encased inside electrofusion coupler and placed in the middle section of the electrofusion coupler.

According to a preferred embodiment of the invention the piping system is characterized in that the pipe end matches the inner surface of said electrofusion coupler by means of a cone shaped structure.

According to a further preferred embodiment of the invention the piping system is characterized in that the cone shaped structure of the pipe end is made on the end surface of the pipe by means of injection molding.

According to a further preferred embodiment of the invention the piping system is characterized in that the length of the framework is half that of the electrofusion coupler.

According to a further preferred embodiment of the invention the piping system is characterized in that there are plastic nails or nails with plastic cap on the framework which support the framework when the one-step molding is being processed.

According to a further preferred embodiment of the invention the piping system is characterized in that thermoplastics such as polyethylene or polypropylene are used for making said electrofusion coupler, while the plastic used to coat the heating wires, to make nails supporting the steel framework, to make the nail cap and to make the electrofusion coupler have the same or similar properties, especially compatibility.

The above object is achieved by a piping system comprising steel mesh reinforced plastic composite pipe and connecting structure, which is characterized in that the end of the plastic composition pipe has a plastic flange preferably made by injection molding, the plastic used for making the flange is the same as that for making the pipe, and that two flange pipe ends are connected by connecting means preferably comprising two pairs of half metal rings and a pair of loose metal flanges with bolts.

The above object is achieved by a piping system, comprising steel mesh reinforced plastic composite pipe and connecting structure, characterized in that the pipes are connected by means of a flange pipe fitting, the flange pipe fitting is preferably made by injection molding, the flange pipe fitting is provided with a steel mesh framework that has the same contour inside, the plastic for making the flange pipe fitting is the same as used for making the pipe, and that one end of the flange pipe fitting is a flange and the other end of the flange pipe fitting is a cone to be connected with an electrofusion coupler.

According to a preferred embodiment of the invention the piping system is characterized in that that has the same kind of steel framework as that of the plastic composite pipe as reinforcement and has the same anticorrosion performance on outer wall as the pipe so as to.

Another objective of this invention is to provide a combining method and device overcome the shortcomings of the prior arts, and to improve the device structure and the final product quality.

This object is achieved by a method for manufacturing steel mesh reinforced plastic composite pipe comprising supplying transverse steel wires to a steel mesh welding machine by using a reel hung outside the device, using a fuzzy welding method in the steel mesh welding machine to weld the transverse steel wires and the longitudinal steel wires supplied by longitudinal wire feeder together to form the steel mesh, continuously hauling off and passing the steel mesh framework through a combining die for combining plastic and steel mesh, which combining die embraces the steel mesh framework whereby the molten plastic and the steel framework are combined inside the combining die to form a semi-finished pipe.

According to a preferred embodiment of the invention the combining die receives the molten plastic from an extruder and being fed continuously from the side face of the combining die. in which the plastic is fed from side face of the combining device during the extrusion process to overcome the shortcomings of the prior arts, and to improve the device structure and the final product quality.

According to a preferred embodiment of the invention the semi-finished pipe is semi-finished pipe is hauled off through a cooling tank to form the finished composite pipe.

The above object is achieved by a production apparatus for manufacturing steel mesh reinforced plastic composite pipe, comprising at least a steel wire feeder, a steel mesh welding machine, a plastic extruder and a combining die and a cooling system, which apparatus is characterized in that the welding machine has a winding and welding mechanism comprising a fuzzy resistance welding structure in which the welding wheel deviates the welding point at a given distance, the cooling system is an inertial circulating self- cooling system, a supporting plate for hanging the reels of transverse steel wire is provided which rotates together with the welding mechanism.

According to the invention the fuzzy electric resistance welding technique serves to overcome shortcomings of prior arts, to prolong service life of the welding wheels and reduce damages to the steel wires.

According to a preferred embodiment of the invention the winding and welding mechanism is supported by an cantilever.

According to a preferred embodiment of the invention the given distance by which the welding wheel deviates the welding point is larger or equal to 60mm.

According to a preferred embodiment of the invention the combining die is adjustable and embraces the steel mesh framework, the plastic extruder feeds molten plastic to the combining die from the side face of the device.

According to a preferred embodiment of the invention the inertial circulating self-cooling device comprises an annular heat radiator fixed on the rotating board of the winding and welding mechanism, said annular heat radiator is connected, through a flexible hose, to a water injection valve and conducting board.

According to a preferred embodiment of the invention the said annular heat radiator contains cooling agent which does not rotate with the radiator in synchronization.

According to a preferred embodiment of the invention the pressure at the welding spot is produced from the resistant force of the damping device of the reel of transverse steel wire that exerted on the reel, with aid from the tensile force produced by the restraints of the welding wheels to the transverse wire, the electrical current is transmitted to the welding spot through the welding wheel and the transverse wire.

According to a preferred embodiment of the invention the quantity of welding wheels is an even number, a pair of welding wheels or a pair of adjacent welding wheels share an electrical power, and that the circuit is preferably formed in that electrical current flows from the positive pole of the power source to the conducting ring, then in this order to the welding wheels, transverse wires, the junctions of several transverse wires and longitudinal wires, the supporting electrode under longitudinal wires, a pair of adjacent welding wheels and corresponding conducting rings, and finally flows back to the negative pole of the power.

According to a preferred embodiment of the invention the combining die comprises an outer shell and a plastic allocating sleeve, a plastic runner between the outer shell and the plastic allocating sleeve, damping bolts that are fixed to the outer shell and can be screwed into the plastic runner, a sieving sleeve and an outer die arranged in the combining area, as well as a corresponding internal molding sleeve and a sizing sleeve.

According to a preferred embodiment of the invention the combining die is fixed on an adjustable platform by means of adjusting bolts.

In the preferred embodiments of the invention a steel mesh framework welding machine, which is supported by a cantilever structure and with the reels of transverse wires hung to it from outside, the burden of labor is reduced and the working efficiency is enhanced.

Preferred embodiments of the invention are now described with reference to the drawings in which:
Fig. 1 is a top view showing the production line for manufacturing steel mesh reinforced plastic composite pipe according to this invention;
Fig. 2 is a principle diagram showing structure of the welding machine according to this invention;
Fig. 3 is a structural arrangement diagram for carrying out the fuzzy welding process by the welding machine;
Fig. 4 is a working principle diagram showing the combining die with the material fed from the side face of the die;
Fig. 5 is a K-side view of Fig. 4, further showing the adjustable function of the die;
Fig. 6 is a view showing the assembly of the pipe and other piping components, wherein the electrofusion connection and flange connection are respectively shown;
Fig. 7 is a diagram showing the structure of connection between electrofusion coupler and flange pipe fitting.

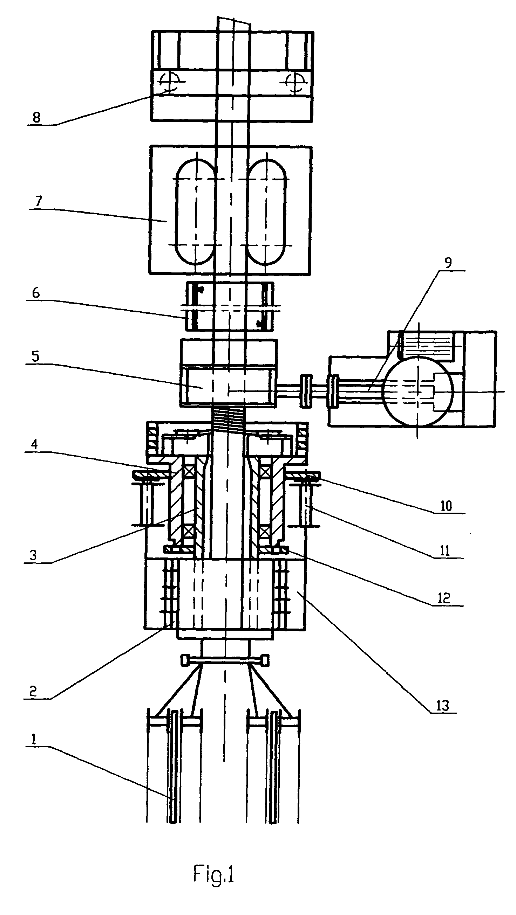

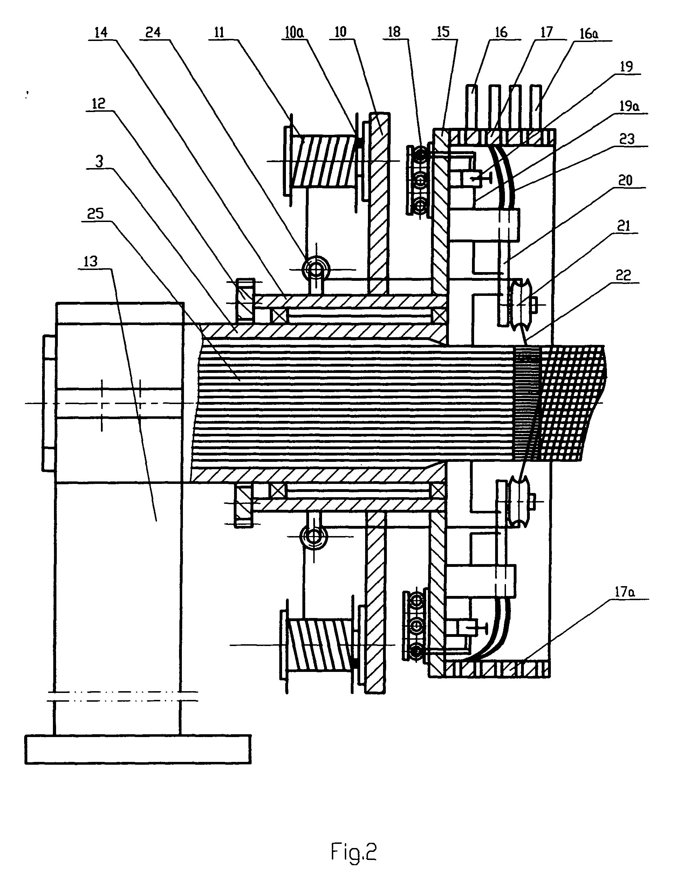

In reference to Fig. 1 and 2, the longitudinal steel wires that are equidistantly spaced along the axis of the production line is fed to the welding machine 2 from the longitudinal wire feeding device 1, and the wires are connected to a haul-off head at the combining die 5. The welding machine 2 is of cantilever structure, comprising a pedestal 13, a cantilever supporting shaft 3 connected to pedestal 13 and the welding mechanism 4, wherein the pedestal 13 and cantilever shaft 3 are fixed and immovable. The welding mechanism 4 is supported on the cantilever shaft 3 by a bearing. The rotating and winding function of the welding mechanism 4 is achieved in such a way. A motor drives a gear 12 through a conventional transmission mechanism (not shown in the drawings) which is engaged with the gear, and the gear is fixed to the connecting sleeve 14 of the welding mechanism 4. Thus the winding and welding mechanism 4 driven by the connecting sleeve 14 that is supported by the cantilever shaft 3 rotates steadily round the cantilever shaft 3. A certain number of reels 11 with full transverse wires are hung to the supporting board 10, and the supporting board 10 is fixed on the connecting sleeve 14 and rotates with the connecting sleeve 14, so that the reel of transverse wires 11 rotate with the supporting board 10. When the transverse wires are wound up, through a guiding wheel 24 and a welding wheel 21, to the longitudinal wires, the rotating reel 11 continues to provide steel wires to the welding wheel 4 of the welding mechanism for winding and welding. The supporting shaft of the transverse wire reel 11 is parallel to the axis of the device. When the transverse wires on a first reel of these reels 11 are used up. second reel of the reels 11 starts to be used and the first reel 11 can be dismounted and a new reel 11 with transverse wires can be mounted to replace the one without wires. Since the preparation of the reel 11 can be done in some place other than the spot of making the pipe, the labor burden is significantly reduced and the working efficiency is greatly raised as compared with prior arts

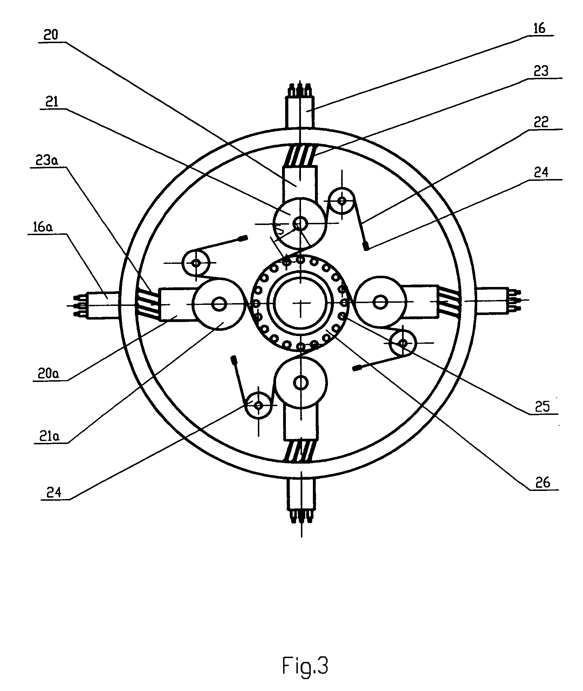

As shown in Fig. 2 and Fig. 3, the welding mechanism 4 of this invention has a supporting board 15 fixed on a connecting sleeve 14, a conducting ring 17, a conducting tile 16, a conducting panel 20, a welding wheel 21 and a supporting electrode 26. The fuzzy resistance welding process is achieved in the following way. Firstly, longitudinal steel wires 25 are placed into and pass through the grooves of the supporting electrodes 26 for transmitting longitudinal wires, and the wires are connected to the haul-off head, then the transverse wires 22 that come from guiding wheels 24 are wound up to the longitudinal wires via welding wheels 21. When the welding mechanism 4 rotates, the damping device 10a of the reel 11 influences the rotation of the reel 11 by producing resistance force to the supporting shaft of the reel 11, meanwhile the welding wheel 21 implies forces to the transverse wires 22 by restraining the transverse wires, so that a tensile force is produced in the transverse wires and a pressing force on longitudinal wires 25 is generated at the same time. The electrical current flows to welding wheels 21 via conducting tile 16, conducting ring 17, conducting wire 23 and conducting board 20. During the welding process, the tensile force of transverse wire 22 produces pressure at the junctions of the transverse wire 22 and the longitudinal wire 25, the transverse wire 22 also acts as a conducting wire to transmit the current. In such a way, the welding wheel 21 can accomplish the welding process without need of directly contacting the junctions of transverse and longitudinal wires. Instead, the distance 5 of the welding wheel from the welding junctions is S ≥ 60mm. Such a welding process is called fuzzy welding in this invention, wherein the points to be welded are not predetermined, while those points with smaller electricity resistance value will be chosen for welding. Welding is generally done at those junctions that are dose to the welding wheel and have a smaller electrical resistance value in the loop. With fuzzy welding technique generally at least two points can be welded in one current cycle. Such a fuzzy welding technique not only ensures that slightest damage is done to the transverse wires which play a major role for pipe strength, but also guarantees the steel mesh possess sound structural stability. Moreover. the number of the points that can be welded in unit time is increased by one time as compared with prior arts. The separation of welding wheels from welding points makes the welding wheel only play the role of conducting electrical current and constrain the transverse wires, so that the welding wheel does not directly touch the welding points, therefore does not directly absorb heat from the welding, as a result electro-ablation is avoided, temperature rising range of the welding wheel is reduced and the service life of the welding wheel is dramatically prolonged, as compared with the prior art. In addition, the arrangement of the welding wheels of this invention is different from that of prior arts. According to this invention, the welding wheels are arranged with an even number in terms of quantity. During normal welding process, a pair of adjacent welding wheels shares the same electric power. The current flows from the positive pole of the power firstly to the conducting tile 16, then orderly to the conducting ring 17, corresponding welding wheel 21, transverse wires 22, the junctions of several transverse wires and longitudinal wires, the supporting electrode under longitudinal wires, a pair of adjacent welding wheels 21a, conducting panel 20a, conducting wire 23a and corresponding conducting rings, and finally flows back to the negative pole of the power to form a loop. In this way, the adjacent two welding wheels share one welding machine, thus the ground line is not needed, so that the structure of the device is simplified and more applicable.

To ensure that the welding system works properly over a long period of time, this invention provides a unique cooling system to the welding mechanism 4, that is, an inertial circulating self-cooling system (see Fig.2). The inertial circulating self-cooling system comprises an annular heat radiator 18 fixed on the rotating board 15 of the welding mechanism 4 and the radiator 18 is connected to the water injection valve 19 and conducting board 20 and 20a through a flexible pipe 1 9a. Prior to use, the circulating pipeline of the cooling system is filled with water, and then the water injection valve 19 is turned off. When the device is started, the annular heat radiator 18 rotates together with rotating board 15, while the cooling agent inside does not simultaneously rotate together with the annular heat radiator 18 within a long time because of the inertial effect. Instead, the cooling agent will have a relative movement in the direction opposite to that of rotation of the annular heat radiator 18. Such a relative movement accomplishes the circulation of the cooling agent and carries the heat from the welding system to the annular heat radiator 18 so as to achieve the self cooling effects. Such a self circulating cooling system does not require a cooling agent circulating pump which runs synchronously, but rather a constant circulating energy is produced by the periodical halt of the device when the reel of transverse wire needs to be changed.

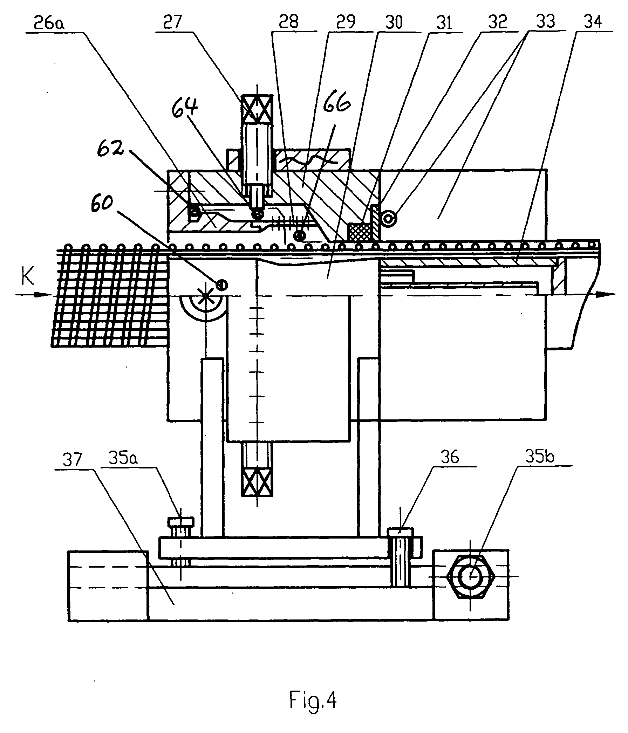

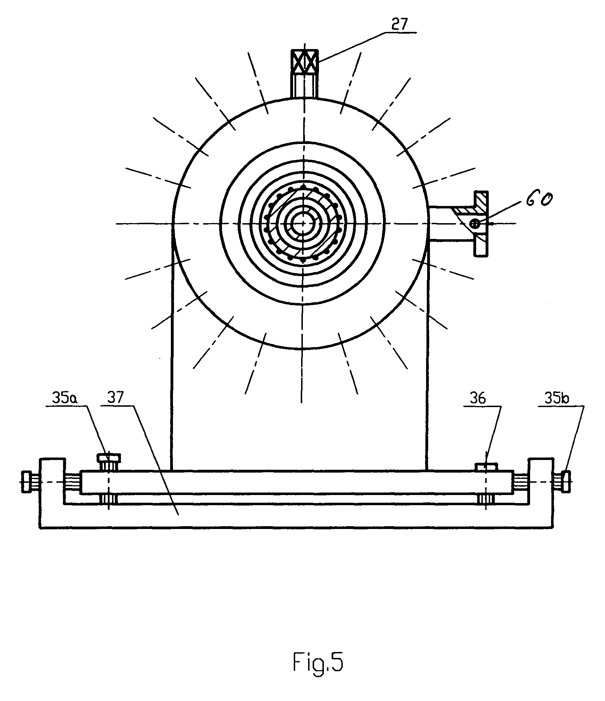

After a steel mesh framework is made by the aforesaid welding machine 2, the framework is hauled off into the combining die 5 by haul-off machine 7. As shown in Fig. 1, 4 and 5, a new combining die is developed to replace the die in prior arts that receives the plastic material from the axial direction of the production line. According to this invention, the combining die 5 is designed to embrace the steel mesh framework, and the extruder 9 is located beside the side face of the combining die and feeds plastics to the die from the side face of the die. Since the combining die of this invention is not placed inside the cavity of the welding machine, instead, it is placed outside the steel mesh framework, thus the combining die can be adjusted conveniently according to the combining result of the composite pipe so as to ensure the product quality. Besides difference in arrangement of the place of the combining die , the die of this invention is also different from the prior art in terms of structure. In reference to Fig. 4 and Fig. 5, the combining die 5 of this invention comprises a cylindrical outer shell 29 and an plastic allocating sleeve 26a affixed with a dovetail damping board, thus a runway 62 for evenly distributing plastic is formed between the outer shell 29 and plastic allocating sleeve 26a. There is damping bolts 27 on the outer shell 29, which can be screwed into the plastic runway 64. A sieving sleeve 28 and die 31 and reshaping ring 32 are located in the combining area 66. The combining die is mounted on an adjustable platform 37 by adjustable bolts 35a, 35b and a pressing bolt 36. During operation, the plastic extruder 9 feeds molten plastics, via the feeding passage 60 located on the side face of the combining die, to the plastic runway of the die 62, and the die evenly allocates the molten plastic extruded from extruder 9 in the runway 62 to the circumference of the runway 64 and the molten plastic enters, via the sieving sleeve 28, into the combining area 66 where the steel framework is combined with plastic. A cylindrical inner sleeve 30 is located in the inner cavity of the steel framework to incorporate with the combining die to accomplish combination of plastic and the steel mesh framework. Afterwards. the haul-off machine 7 haul off the soft semi-finished pipe out of the combining area 66, then sends the pipe into an annular space which is formed by the internal sizing sleeve 34, the outer die 31 with a cooling water tank 33 and a reshaping ring, for sizing, reshaping and cooling of the pipe, to obtain pipe with smooth inner and outer walls. Afterwards, semi-finished product with steel wires exposed at the pipe end may be obtained by cutting the pipe with the cutting saw 8.

During plastic processing and molding process there is heat heterogeneity, which can cause uneven flow of the plastic and can further lead to non-uniform of the wall thickness of the pipe. Hence, the combining die needs to be adjusted to obtain pipes with uniform wall thickness. In prior arts, plastic are fed in axial direction. However, as the combining die is located inside the welding machine, it is hard to observe and evaluate the change of the manufactured products before the pipe is pulled out from the die. This is particularly true when the pipe wall thickness needs to be controlled during operation, and such a control can be performed only when the machine is halted, not to mention the complication of the operation. While according to the present invention, when the wall thickness needs to be adjusted according to the deviation of the wall thickness, platform 37 can be utilized to conduct rough adjustment of thickness. That is, use the adjusting bolts 35a and 35b on the adjusting platform to move the platform up, down, left and right so as adjust the position of the combining die. In this way the gap between the outer die 31, the reshaping ring 32 and internal sizing sleeve 30 can be adjusted to change the flux of plastic so as to adjust the thickness of the pipe. The damping bolts 27 can be used to conduct slight adjustment, i.e. to change the plastic flow resistance by adjusting the height of the damping bolt 27 so as to further reduce the thickness deflection of the pipe. The two modes in the present invention can be combined to carry out the adjustment.

Through the aforesaid improvements, as compared with the prior arts, this invention possesses sound advantages both in terms of production speed and product quality. Advantages of this invention are reflected as follows.

**Table 1**

| Item | Pipe materials | Outside Diameter/ mm | Wall thickness/mm | Quantity of longitudinal wire/dia meter mm | Quantity of transverse wire/dia meter mm | net space of steel mesh/m m | production speed m/min |
|---|---|---|---|---|---|---|---|
| SU13626 45 | HDPE | 150 | 12 | 42/3.0 | 2/3.5 | 7.6*7.5 | 0.10 |
| Gb22779 75 | HDPE | 320 | 14 | 90/3.0 | 2/3.5 | 7.6*8 | 0.12 |
| Materials of this invention | HDPE | 325 | 12.5 | 100/2.5 | 4/3.0 | 5.5*5 | 0.30 |

The present invention possesses advantages not only in terms of production speed, but also in terms of quality and product conformity percentage, as a result of adoption of the side face plastic feeding mode, prompt observation and timely adjustment of the device.

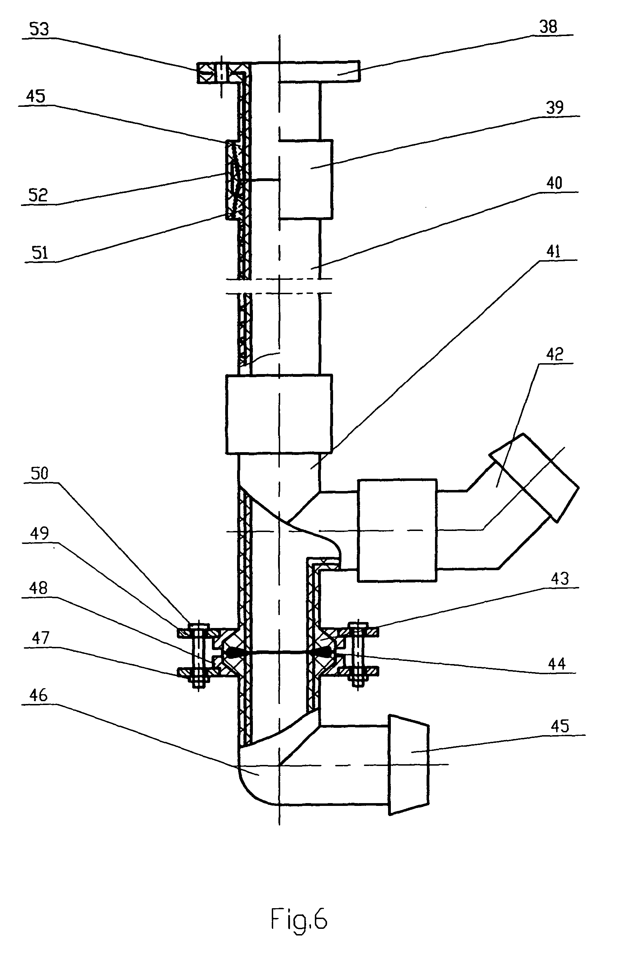

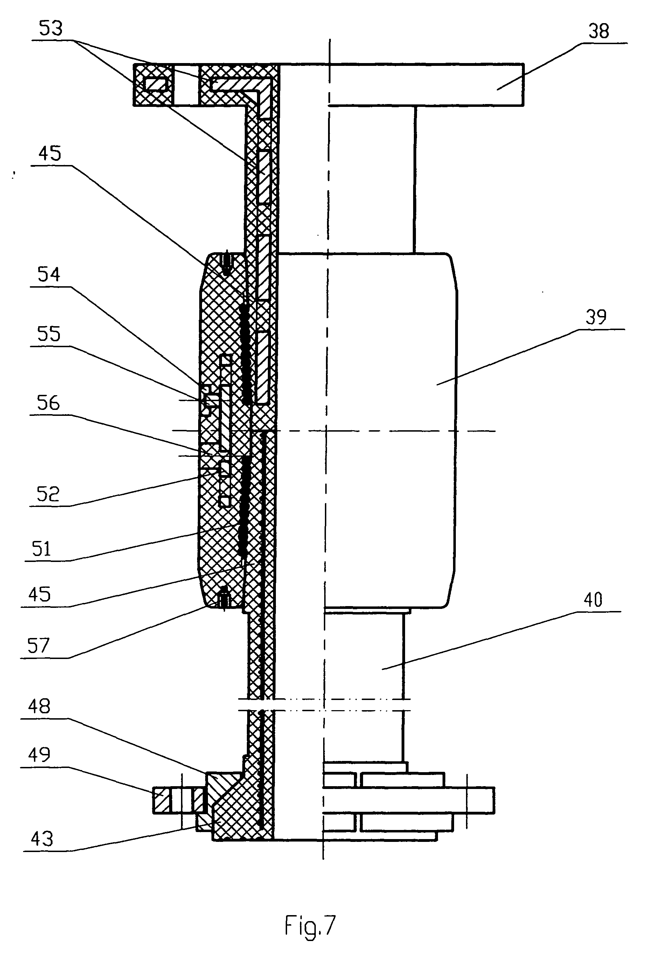

In practice, the pipes are used to build pipelines. To ensure a reliable connection of the composite pipe produced according to this invention, this invention provides joining technique and pipe fittings that having the same framework as that of the pipe and the same anti-corrosion property as that of the pipe to ensure that the formed pipeline has reliable and convenient connection and uniform anticorrosion resistance. For this purpose, joints are designed in this invention. Refer to Fig. 6 and 7. Fig 6 shows two connection methods, namely electrofusion connection and flange connection. Fig. 7 shows the structural diagram of the electrofusion coupler and two flange connections.

As far as permanent connection is involved, the electrofusion coupler is mainly used. As shown in Fig. 7, the electrofusion connection is composed of an thermoplastic electrofusion coupler 39 reinforced with steel framework, as well as cone shaped pipe ends 45 which are to be inserted into the electrofusion coupler 39. The pipe end is made cone shaped to have a good match with inner wall of the eleetrofusion coupler and less clearance. The cone shaped pipe end 45 is made by injection molding method, and it seals the wires exposed on the cross section of the pipe to prevent the wires from corrosion. The perfect match between the cone shaped structure of the pipe end 45 and the electrofusion coupler 39 ensures the consistence of the sizes of the pipe product and the pipeline to be installed. The electrofusion coupler 39 is made of plastic that is the same as the material used in pipe production and the annular steel framework 52 which is encased inside plastics by means of injection molding. The length of the framework 52 is half that of electrofusion coupler 39 and the framework 52 is encased axially in the middle section of the coupler 39. To keep the framework 52 in a correct position and to prevent the wires from exposing to the air during the injection molding process of the electrofusion coupler, plastic nails 56 or metal nails 55 covered with plastic cap 54 are evenly fixed to the outer surface of the framework 52. The plastic used for nails 56 production and plastic cap 54 production should be consistent with that used for electrofusion coupler 39 production. Spiral metallic wire 51 coated with plastic is placed in the inner surface of the electrofusion coupler 39. The wire ends 51 are respectively connected with the terminals 57 located at the ends of the coupler 39. After the cone shaped pipe end 45 and the electrofusion coupler is assembled, apply current between the terminals 57, then the heating element 51 can melt the inner surface of the sleeve 39 and the outer surface of the pipe end 45, and the melted plastic will join the pipes 40 or join pipe 40 to pipe fitting 38, tee 41, elbow 42 or 46 after the plastic cools down. The cone shaped joining structure between the pipe end 45 and the coupler 39 enables a dose contact as well as small and uniform gap between pipe ends 45 and electrofusion coupler 39, thus enables fast and uniform welding. The consistency of the size of the products and assembly is ensured to the utmost by adopting injection molding technique to produce cone shaped pipe end 45 and electrofusion coupler 39, thus it is also ensured that all joints in the pipeline have the same high quality. W096/26380 discloses such a cone shaped joining structure. However, in W096/26380, a lathe turning process is adopted to make cone shaped pipe end. Such a lathe turning process should be done in two steps instead of one step, i.e. the pipe end is sealed first with plastic prior to the turning process. That method is of low efficiency. Moreover, the consistency of size of the pipe end and electrofusion coupler after being processed by lathe turning is not as uniform as that in this invention, therefore, the quality of pipeline connection is not as good as that of this invention.

As above mentioned, in this invention, the framework 53 of the electrofusion coupler is located axially in the middle section and the length of the framework is half that of the electrofusion coupler 39. The heating wire 51 is coated with plastic. Such a design enables the connection structure to possess both enough strength and good welding performance. so that reliable connection can be achieved according to this invention. The common existing connection structures, which are well known in the art, adopts pure plastic electrofusion coupler without reinforcing framework. The strength of it in circumferential direction is not as good as that of the coupler described in this invention and in W096/26380, but its welding performance is relatively good. When welding pure plastic pipe with electrofusion coupler, the bulk of the molten plastic increases by about 30% and pressure in the melting pool increases after the plastic melts. As plastic has good thermal expansion performance and low elastic modulus, the good thermal expansion performance enables the space between the coupler and pipe ends to increase thus reduces the increase in pressure in the melting pool. Furthermore, when the pressure is too high, the pure plastic coupler and pipe can deform to certain extent to maintain the pressure on a proper level that makes the molten plastic evenly distributed in circumferential direction and axial direction as well as prevents the molten plastic from spilling out from the interface between the two pipe ends the ends of the coupler. As a result, the welding seam is made uniform, full, and have high intensity and low residual stress. As disclosed in W096/26380, the electrofusion coupler has a steel framework throughout nearly the total length of the coupler body and the pipe is also reinforced with framework. Both pipe and the electrofusion coupler have high strength and rigidity. Since the thermal expansion coefficient of steel is much bower than that of plastic. when the molten plastic expands, the coupler can not fully expands due to the restraint of the framework, which causes the melting plastic to overflow from the interface of the ends of the coupler and the ends of the pipes due to the expansion of molten plastic is constrained and the pressure in the pool is too high. The axial flow of the overflowed molten plastic may cause heating wires contact each other and resulting in short circuit. The overflow of plastic may cause defects in welding seam, while the short circuit may cause over-high current, which can cause degradation and carbonization of the molten plastic and produces air bubbles. If this is the case, the welding seam does not have good sealing performance due to the existence of welding defects, carbonization and bubbles. For the above stated reasons, although each individual component has high strength, the final electrofusion connection does not have high strength and good sealing result, thus the connected pipeline is not reliable. The present invention combines the merits of the electrofusion couplers of the two prior arts aforementioned, which is stated as follow. According to this invention, the steel framework is placed in the middle section of the coupler in radial and axial direction and the length of the framework is half that of the coupler. which provides the coupler with sufficient strength. The rest part of the coupler is made of pure plastic which can fully expand so as to abate the rise of pressure in the melting pool to prevent the molten plastic from overflowing. The heating wires are coated with plastic to prevent short circuits during the welding process. The cone shaped structure of the electrofusion coupler and the pipe end are well matched with each other to ensure reliable electrofusion connection.

In addition, flange connection can also be adopted to connect steel mesh reinforced plastic composite pipe. As far as non-permanent connection and small diameter pipe are concerned, flange connection can be used by making a flange at the pipe end through one-step injection molding process. Such a connection can be accomplished by the combination of a flange 43 on the pipe end by means of injection molding, metal half rings 48, a loose flange 49, a rubber sealing ring 44, connecting bolts 50 and connecting nuts 47. One face of the flange 43 is flat for connection and the other face is ramp shaped for exerting the pre-tightening force. The installing sequence is as follows. As shown in Fig. 6, put the loose flange 49 round the pipe end 43, place the rubber sealing ring 44 at appropriate position between the jointing surface of the flanges, put the metal half rings 48 on the ramp surface of the flange, place the loose flange 49 to the metal half rings 48, then tighten the bolts and nuts. Such a connection is very convenient for Operation and can obtain same strength throughout the pipeline, and is suitable for non-permanent connections between small diameter composite pipes, between the composite pipe and metal pipe and also between a composition pipe and a valve, pump, etc.

As for non-permanent connection between large diameter steel mesh reinforced plastic composite pipes, another kind of flange connection is adopted. As for large diameter steel mesh reinforced plastic composite pipe, the pipeline sustains higher bad in axial direction due to pressure from the transmitted media, and the hoop rigidity of the pipeline is relatively low. In this circumstance, the flange structure for non-permanent connection between small diameter pipes is not applicable any more because for large diameter pipes the pure plastic flange at the pipe end can not offer sufficient anti-shearing strength in axial direction, and the steel flange that acts on the ramp of the flange pipe end may produce a force in radial direction, which tends to cause distortion of pipe and results in boss of tightness of the connection. To solve this problem, this invention offers a flange pipe fitting 38 with steel framework inside as reinforcement. The flange pipe fitting 38 is made by injection molding with a steel framework encased between inner layer plastic and outer layer plastic. One end of the flange pipe fitting is a flange and the other end is a cone-shaped one to match the structure of the electrofusion coupler 39. Whenever a flange connection is needed, the flange pipe fitting is firstly connected with the pipe with an electrofusion coupler, then connect the flange pipe fitting to other pipeline component. In comparison with the flange connection structure disclosed in W096/26380, the structure of this invention has higher anti-corrosion performance and higher strength as a whole as the steel framework is completely packed by the plastic, and it is more convenient for use. As shown in Fig.7, the flange connection structure of this invention can be used for non-permanent connection between two steel mesh reinforced plastic pipes, between a composite pipe and a steel pipe, as well as between a composite pipe and a valve, pump, etc, and the connected pipe line has the same strength throughout the whole pipeline.

The connection of steel mesh reinforced plastic composite pipes also needs various kinds of pipe fittings, such as tee 41, 90° elbow 46, 45° elbow 42. All of these pipe fittings are reinforced with steel framework of the same strength, which is combined with plastic on both inner and outer sides by one step injection molding process. The structure of the pipe fittings is identical to that of the composite pipe. In order to prevent the steel framework from moving during the injection molding process, sufficient plastic supporting nails or nails with plastic cap of a certain thickness are attached to the framework of the pipe fitting. The plastic supporting nails are made of the same material as that used for manufacturing of the pipe fittings, such as polyethylene or polyethylene compatible materials, to ensure perfect fusion of the nails and the injected plastic.

## Claims

1. A piping system, comprising steel mesh reinforced plastic composite pipe and connecting structure, **characterized in that** said connecting structure comprises an electrofusion coupler and a pipe end that matches the inner surface of said electrofusion coupler perfectly by means of a cone shaped structure, the cone shaped structure of the pipe end is made on the end surface of the pipe by means of injection molding, there are electric heating wires coated with plastic placed in the inner surface of the electrofusion coupler, which is connected to the two terminals, there is a annular steel mesh framework encased inside electrofusion coupler and placed in the middle section of the electrofusion coupler, the length of the framework is half that of the electrofusion coupler, there are plastic nails or nails with plastic cap on the framework which support the framework when the one-step molding is being processed.

2. A piping system as defined in claim 1, **characterized in that** thermoplastics such as polyethylene or polypropylene are used for making said electrofusion coupler, while the plastic used to coat the heating wires, to make nails supporting the steel framework, to make the nail cap and to make the electrofusion coupler have the same or similar properties, especially compatibility.

3. A piping system, comprising steel mesh reinforced plastic composite pipe and connecting structure, **characterized in that** the end of the plastic composition pipe has a plastic flange made by injection molding, the plastic used for making the flange is the same as that for making the pipe, two flange pipe ends are connected by two pairs of half metal rings and a pair of loose metal flanges with bolts.

4. A piping system, comprising steel mesh reinforced plastic composite pipe and connecting structure, **characterized in that** the pipes are connected by means of a flange pipe fitting, the flange pipe fitting is made by injection molding, with a steel mesh framework that has the same contour inside, the plastic for making the flange pipe fitting is the same as used for making the pipe, one end of the flange pipe fitting is a flange, the other end is a cone to be connected with an electrofusion coupler.

5. A method for manufacturing steel mesh reinforced plastic composite pipe as defined in claim 1, 2 or 4, comprising the following steps: supplying transverse steel wires to welding machine by using a reel hung outside the device, the steel mesh welding machine uses fuzzy welding method to weld the transverse steel wires and the longitudinal steel wires supplied by longitudinal wire feeder together to form the steel mesh, the steel mesh framework is continuously hauled off and passes through a die for combining plastic and steel mesh, the combining die embraces the steel mesh framework and receives the molten plastic from an extruder and being fed continuously from the side face of the combining die, the molten plastic and the steel framework are combined inside the combining die to form a semi-finished pipe that is then hauled off through the cooling tank to form the finished composite pipe.

6. A production apparatus for manufacturing steel mesh reinforced plastic composite pipe, comprising a longitudinal steel wire feeder, a steel mesh welding machine, a plastic extruder, a combining die, a cooling tank, a haul off machine, a cutting saw, a specialty injection molding machine and moulds, **characterized in that** the welding machine has a winding and welding mechanism supported by an cantilever, the winding and welding mechanism comprises a fuzzy resistance welding structure in which the welding wheel deviates the welding point at a distance larger or equal to 60mm, an inertial circulating self-cooling system, and a supporting plate for hanging the reels of transverse steel wire which rotates together with the welding mechanism, the combining die is adjustable and embraces the steel mesh framework, the plastic extruder feeds molten plastic to the combining die from the side face of the device.

7. A device as defined in claim 6, **characterized in that** the inertial circulating self-cooling device comprises an annular heat radiator fixed on the rotating board of the winding and welding mechanism, said annular heat radiator is connected, through a flexible hose, to water injection valve and conducting board, said annular heat radiator contains cooling agent which does not rotate with the radiator in synchronization.

8. A device as defined in claim 6, **characterized in that** the pressure at the welding spot is produced from the resistant force of the damping device of the reel of transverse steel wire that exerted on the reel, with aid from the tensile force produced by the restraints of the welding wheels to the transverse wire, the electrical current is transmitted to the welding spot through the welding wheel and the transverse wire.

9. A device as defined in claim 6 or 8, **characterized in that** the quantity of welding wheels is an even number, a pair of welding wheels or a pair of adjacent welding wheels share an electrical power, the circuit is formed in this way: electrical current flows from the positive pole of the power source to the conducting ring, then orderly to the welding wheels, transverse wires, the junctions of several transverse wires and longitudinal wires, the supporting electrode under longitudinal wires, a pair of adjacent welding wheels and corresponding conducting rings, and finally flows back to the negative pole of the power.

10. A device as defined in claim 6, **characterized in that** the combining die comprises an outer shell and a plastic allocating sleeve, a plastic runner between the outer shell and the plastic allocating sleeve, damping bolts that are fixed to the outer shell and can be screwed into the plastic runner, a sieving sleeve and an outer die arranged in the combining area, as well as a corresponding internal molding sleeve and a sizing sleeve, where the combining die is preferably fixed on an adjustable platform by means of adjusting bolts.
